# EUROPÄISCHE PATENTSCHRIFT

(11) **EP 4 438 362 B1**
(45) Veröffentlichungstag und Bekanntmachung des Hinweises auf die Patenterteilung: **28.10.2026**
(21) Anmeldenummer: 23217930.9
(22) Anmeldetag: 19.12.2023
(51) Int. Cl.: B60K 1/04

(54) **ENERGIEVERSORGUNGSEINHEIT, SYSTEM UND SCHWERLAST-MODULFAHRZEUG**
POWER SUPPLY UNIT, SYSTEM AND HEAVY-LOAD MODULAR VEHICLE
UNITÉ D'ALIMENTATION EN ÉNERGIE, SYSTÈME ET VÉHICULE MODULAIRE POUR CHARGES LOURDES

(30) Priorität: 27.03.2023 DE 102023202726
(43) Veröffentlichungstag der Anmeldung: 02.10.2024
(73) Patentinhaber: Scheuerle Fahrzeugfabrik GmbH, 74629 Pfedelbach (DE)
(72) Erfinder: Maier, Tobias, 89197 Weidenstetten (DE); Schmalzbauer, Jens, 74639 Zweiflingen (DE); Stückle, Andreas, 70567 Stuttgart (DE)
(74) Vertreter: Ullrich & Naumann PartG mbB

(56) Entgegenhaltungen:
- CN-A- 113 874 247
- DE-A1- 102015 207 427
- US-A1- 2017 232 828
- US-A1- 2019 061 544
- US-B2- 11 305 746

## Beschreibung

Die Erfindung betrifft ein System umfassend mindestens eine Energieversorgungseinheit und ein elektrohydraulisches Aggregat für ein Schwerlast-Modulfahrzeug.

Weiterhin betrifft die Erfindung ein Schwerlast-Modulfahrzeug.

Schwerlast-Modulfahrzeuge der in Rede stehenden Art sind seit Jahren aus der Praxis bekannt. Diese weisen üblicherweise ein oder mehrere miteinander gekoppelte Fahrwerke auf, die über ein oder mehrere Antriebseinheiten angetrieben werden. Die Antriebseinheiten, sog. Power Pack Units, weisen ein Antriebsaggregat, beispielsweise einen Dieselmotor oder einen Elektromotor auf, mit welchen eine Hydraulikpumpe angetrieben wird. Über entsprechende Fluidverbindungen kann somit ein hydrostatischer Antrieb an der bzw. den Fahrwerken betrieben werden.

Durch entsprechende Schwerlast-Modulfahrzeuge ist es möglich, nahezu beliebig große Transportverbünde zu realisieren, um somit extreme Lasten transportieren zu können. Sofern Antriebseinheiten mit einem elektrischen Aggregat (Elektromotor) genutzt werden, ist jedoch die Energieversorgung problematisch, da ein Transport unterbrochen werden muss, um die Batterien der Antriebseinheiten zu laden. Entsprechend aufwändig ist die Planung solcher Transporte. Dabei besteht zusätzlich das Problem, dass eine Ladeinfrastruktur für die Batterien zur Verfügung stehen muss, was insbesondere bei Transporten in abgelegenen Gebieten nicht gewährleistet ist. Ein weiterer Nachteil ist, dass bei einem Defekt der Batterie das Schwerlast-Modulfahrzeug manövrierunfähig ist. Insgesamt sind batteriebetriebene Antriebseinheiten somit nur unter Einhaltung restriktiver Randbedingungen für Schwerlast-Modulfahrzeuge geeignet und weisen aufgrund der Probleme betreffend das Laden der Batterien erhebliche Nachteile auf.

Die DE 10 2015 207 427 A1 offenbart eine Energieversorgungseinheit mit einem Batteriepack und einem Elektromotor, die in einem Rahmen angeordnet sind.

Der vorliegenden Erfindung liegt die Aufgabe zugrunde, ein System mit einer Energieversorgungseinheit und einem elektrohydraulischen Aggregat anzugeben, welches einen flexiblen und zuverlässigen elektrischen Betrieb von Schwerlast-Modulfahrzeugen ermöglicht. Des Weiteren soll ein verbessertes Schwerlast-Modulfahrzeug angegeben werden.

Die vorliegende Offenbarung beschreibt eine Energieversorgungseinheit für ein elektrohydraulisches Aggregat eines Schwerlast-Modulfahrzeugs beansprucht, mit mindestens einem elektrischen Energiespeicher zum Betreiben eines Elektromotors des elektrohydraulischen Aggregats, mindestens einem elektrischen Verbindungselement zur Herstellung einer lösbaren, elektrischen Verbindung des mindestens einen elektrischen Energiespeichers mit dem Elektromotor und mindestens einem mechanischen Verbindungselement zur Herstellung einer lösbaren, mechanischen Verbindung mit dem elektrohydraulischen Aggregat und/oder einem Fahrwerk des Schwerlast-Modulfahrzeugs.

In Bezug auf das System wird die voranstehende Aufgabe durch die Merkmale des Anspruches 1 gelöst. Damit ist ein System umfassend mindestens eine Energieversorgungseinheit und ein elektrohydraulisches Aggregat für ein Schwerlast-Modulfahrzeug beansprucht, wobei die Energieversorgungseinheit mindestens einen elektrischen Energiespeicher zum Betreiben eines Elektromotors des elektrohydraulischen Aggregats, mindestens ein elektrisches Verbindungselement zur Herstellung einer lösbaren, elektrischen Verbindung des mindestens einen elektrischen Energiespeicher mit dem Elektromotor und mindestens ein mechanisches Verbindungselement zur Herstellung einer lösbaren, mechanischen Verbindung mit dem elektrohydraulischen Aggregat und/oder einem Fahrwerk des Schwerlast-Modulfahrzeug aufweist, wobei das elektrohydraulische Aggregat einen Elektromotor und mindestens eine von diesem angetriebene Hydraulikpumpe aufweist, wobei an dem elektrohydraulischen Aggregat mindestens ein zu dem elektrischen Verbindungselement der Energieversorgungseinheit komplementäres elektrisches Verbindungselement angeordnet ist, so dass der mindestens eine elektrische Energiespeicher lösbar, elektrisch mit dem Elektromotor verbindbar ist.

In Bezug auf das Schwerlast-Modulfahrzeug wird die voranstehende Aufgabe durch die Merkmale des Anspruches 13 gelöst. Damit ist ein Schwerlast-Modulfahrzeug mit mindestens einem System nach einem der Ansprüche 1 bis 12 und mindestens einem Fahrwerk beansprucht.

In erfindungsgemäßer Weise ist erkannt worden, dass die zugrundeliegende Aufgabe in verblüffend einfacher Weise durch eine Energieversorgungseinheit gelöst werden kann, mit welcher der zur elektrischen Energieversorgung benötigte elektrische Energiespeicher austauschbar bereitgestellt wird. Im Konkreten weist die Energieversorgungseinheit hierzu mindestens einen elektrischen Energiespeicher auf, mit welchem der Elektromotor eines elektrohydraulischen Aggregats betreibbar ist. Die Energieversorgungseinheit bzw. der elektrische Energiespeicher ist dabei lösbar mit dem elektrohydraulischen Aggregat elektrisch koppelbar. Somit erfüllt das System aus elektrohydraulischem Aggregat und Energieversorgungseinheit die Aufgabe einer Antriebseinheit (PPU) für ein Schwerlast-Modulfahrzeug, wobei der bzw. die elektrischen Energiespeicher auswechselbar ist/sind. Somit können entladene elektrische Energiespeicher auf einfache Weise durch geladene elektrische Energiespeicher ausgetauscht werden, so dass Stillstandszeiten des Schwerlast-Modulfahrzeugs minimiert werden. Auch ist es möglich, defekte elektrische Energiespeicher auszutauschen, so dass eine schnelle Wiederherstellung der Einsatzfähigkeit gegeben ist. Ein weiterer wesentlicher Vorteil besteht darin, dass der mindestens eine elektrische Energiespeicher unabhängig vom Einsatzort geladen werden kann. Somit kann das Schwerlast-Modulfahrzeug unabhängig von einer Ladeinfrastruktur betrieben werden, da geladene elektrische Energiespeicher mitgeführt und bei Bedarf gegen entladene getauscht werden können. Insgesamt wird ein flexibler und zuverlässiger Betrieb des Schwerlast-Modulfahrzeugs gewährleistet. In vorteilhafter Weise kann die Energieversorgungseinheit elektrische, hydraulische, mechanische und ggf. weitere Verbindungselemente aufweisen, um alle notwendigen Medien und Signale, die zum Betrieb notwendig sind übertragen zu können, wobei diese Verbindungselemente eine lösbare Verbindung ermöglichen, so dass ein einfacher Austausch der Energiespeicher möglich ist. Alternativ oder zusätzlich könnte ein Steuerleitungs-Verbindungselement angeordnet sein, um eine Steuerleitung zwischen Energieversorgungseinheit und elektrohydraulischem Aggregat bereitzustellen, wobei es sich auch hier um eine einfach zu lösende Verbindung handeln sollte.

Dabei ist es denkbar, dass die Energieversorgungseinheit über mechanische Verbindungselemente mit dem elektrohydraulischen Aggregat und/oder mit dem Fahrwerk verbindbar ist. Je nach Anzahl der Fahrwerke kann die Energieversorgungseinheit entsprechend angeordnet werden, wobei wesentlich ist, dass eine lösbare, elektrische Verbindung zu dem elektrohydraulischen Aggregat herstellbar ist, um die Versorgung mit elektrischer Energie zu ermöglichen.

Der Begriff "Energiespeicher" ist im Rahmen dieser Offenbarung im weitesten Sinne zu verstehen, kann es sich dabei um einen beliebigen elektrischen Energiespeicher handeln, der vorzugsweise wiederaufladbar ausgebildet ist.

In vorteilhafter Weise kann die Energieversorgungseinheit mindestens eine Aufnahme für den mindestens einen elektrischen Energiespeicher aufweisen, beispielsweise einen Rahmen oder ein Gehäuse. Somit kann der elektrische Energiespeicher an der Energieversorgungseinheit, insbesondere austauschbar, angeordnet werden. In vorteilhafter Weise kann die Aufnahme für mehrere elektrische Energiespeicher ausgelegt sein, so dass die Anzahl der elektrischen Energiespeicher auf den konkreten Transport abgestimmt werden kann. Somit wird vermieden, dass schwere elektrische Energiespeicher mitgeführt werden, die bei dem Transport nicht benötigt werden.

In weiter vorteilhafter Weise kann/können ein elektrischer Energiespeicher oder mehrere elektrische Energiespeicher lösbar in der Aufnahme form- und/oder kraftschlüssig festlegbar sein. Durch eine solche Konstruktion ist es möglich, die elektrischen Energiespeicher auswechselbar anzuordnen. Im Konkreten ist es denkbar, dass die elektrischen Energiespeicher über eine Schraubverbindung, eine Klemmverbindung oder eine Clip-Verbindung in bzw. an der Aufnahme angeordnet sind. Wesentlich ist lediglich, dass der elektrische Energiespeicher bzw. die elektrischen Energiespeicher auf einfache Weise gewechselt werden können.

Gemäß einer vorteilhaften Ausgestaltung kann das mindestens eine mechanische Verbindungselement an der Aufnahme ausgebildet sein. Bei einer solchen Konstruktion könnte die gesamte Energieversorgungseinheit gewechselt werden, wenn ein Wechsel des elektrischen Energiespeichers notwendig ist. Alternativ oder zusätzlich kann der mindestens eine elektrische Energiespeicher auswechselbar in bzw. an der Aufnahme angeordnet sein.

In vorteilhafter Weise kann es sich bei der elektrischen Verbindung um eine Gleichspannungsverbindung handeln. Dadurch wird mit konstruktiv einfachen Mitteln eine zumindest im Wesentlichen unmittelbare Versorgung des Elektromotors mit elektrischer Energie ermöglicht. Zur Herstellung der Gleichspannungsverbindung ist es denkbar, dass zueinander komplementär ausgebildete Gleichspannungs-Verbindungselemente angeordnet sind. Diese sind in vorteilhafter Weise dazu ausgelegt, Ströme von mindestens 300 A zu transportieren.

In weiter vorteilhafter Weise kann die Energieversorgungseinheit eine Kühleinrichtung zum Kühlen des mindestens einen elektrischen Energiespeichers und/oder eine Heizeinrichtung zum Beheizen des mindestens einen elektrischen Energiespeicher aufweisen. Durch diese konstruktive Maßnahme kann die Vorrichtung im Wesentlichen unabhängig von der herrschenden Außentemperatur zuverlässig betrieben werden. Hierbei ist es weiterhin denkbar, dass mindestens ein Fluidverbindungselement zur Herstellung einer lösbaren Fluidverbindung der Kühleinrichtung und/oder der Heizeinrichtung mit dem elektrohydraulischen Aggregat angeordnet ist.

In besonders vorteilhafter Weise, kann es sich bei dem Energiespeicher um eine Batterie oder einen Akkumulator handeln. Der Energiespeicher kann eine Nennspannung von über 400 Volt, beispielsweise von 400 Volt bis 1000 Volt, vorzugsweise von 400 Volt bis 800 Volt und/oder einer Nennleistung im Bereich von 100 kW bis 1000 kW und/oder eine Kapazität von 40 kWh bis 1000 kWh, aufweisen. Energiespeicher mit entsprechenden Kennwerten sind besonders gut zum Betrieb eines elektrohydraulischen Aggregats geeignet.

Gemäß einer vorteilhaften Ausgestaltung kann an dem elektrohydraulischen Aggregat mindestens ein mechanisches Verbindungselement angeordnet sein, das komplementär zu dem mindestens einen mechanischen Verbindungselement der Energieversorgungseinheit ausgebildet ist. Dadurch wird erreicht, dass die Energieversorgungseinheit und das elektrohydraulische Aggregat lösbar, mechanisch miteinander verbindbar sind. Mit anderen Worten kann die Energieversorgungseinheit dadurch mit dem elektrohydraulischen Aggregat lösbar gekoppelt werden.

In vorteilhafter Weise kann an dem elektrohydraulischen Aggregat mindestens eine Aufnahme für den mindestens einen elektrischen Energiespeicher angeordnet sein, beispielsweise ein Rahmen oder ein Gehäuse. Bei einer solchen Ausgestaltung bildet der Energiespeicher als solches die Energieversorgungseinheit. Dabei könnte zum Beispiel das Gehäuse des Energiespeichers das mechanische Verbindungselement realisieren, welches eine lösbare mechanische Verbindung, insbesondere eine form- und/oder kraftschlüssige Verbindung, mit der Aufnahme ermöglicht. Des Weiteren kann der Energiespeicher ein elektrisches Verbindungselement, beispielsweise einen Stecker, eine Buchse etc., aufweisen, um die elektrische Verbindung mit dem Elektromotor zu ermöglichen. Eine solche Ausgestaltung würde sich durch eine besonders einfache Konstruktion auszeichnen.

In weiter vorteilhafter Weise können mehrere Energieversorgungseinheiten angeordnet sein, insbesondere unter Berücksichtigung der Größe des Fahrzeugverbunds.

Gemäß einer vorteilhaften Ausgestaltung kann mindestens eine Energieversorgungseinheit, in Längsrichtung des elektrohydraulischen Aggregats gesehen, seitlich an dem elektrohydraulischen Aggregat festlegbar sein, vorzugsweise an beiden Seiten des elektrohydraulischen Aggregats. Eine solche Konstruktion hat den Vorteil, dass das Gewicht der Energiespeicher gleichmäßig um die Längsachse der elektrohydraulischen Einheit angeordnet werden kann. Alternativ oder zusätzlich kann mindestens eine Energieversorgungseinheit an einer Unterseite und/oder an einer Oberseite des elektrohydraulischen Aggregats festlegbar sein. Gemäß einer weiteren alternativen oder zusätzlichen Ausgestaltung kann mindestens eine Energieversorgungseinheit an einer Vorderseite und/oder an einer Hinterseite des elektrohydraulischen Aggregats festlegbar sein. Je nachdem, wo die Energieversorgungseinheit angeordnet ist, sind somit entsprechende mechanische Verbindungselemente an dem elektrohydraulischen Aggregat vorzusehen.

In vorteilhafter Weise kann an dem Fahrwerk mindestens ein mechanisches Verbindungselement angeordnet sein, das komplementär zu dem mindestens einen mechanischen Verbindungselement der Energieversorgungseinheit ausgebildet ist. Dadurch ist es möglich, die Energieversorgungseinheit und das Fahrwerk lösbar, mechanisch miteinander zu verbinden.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 13 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines erfindungsgemäßen Systems,
- Fig. 2: in einer schematischen Darstellung, eine Seitenansicht eines Ausführungsbeispiels eines erfindungsgemäßen Schwerlast-Modulfahrzeugs, und
- Fig. 3: in einer schematischen Darstellung, eine Draufsicht auf das Schwerlast-Modulfahrzeug gemäß Fig. 2.

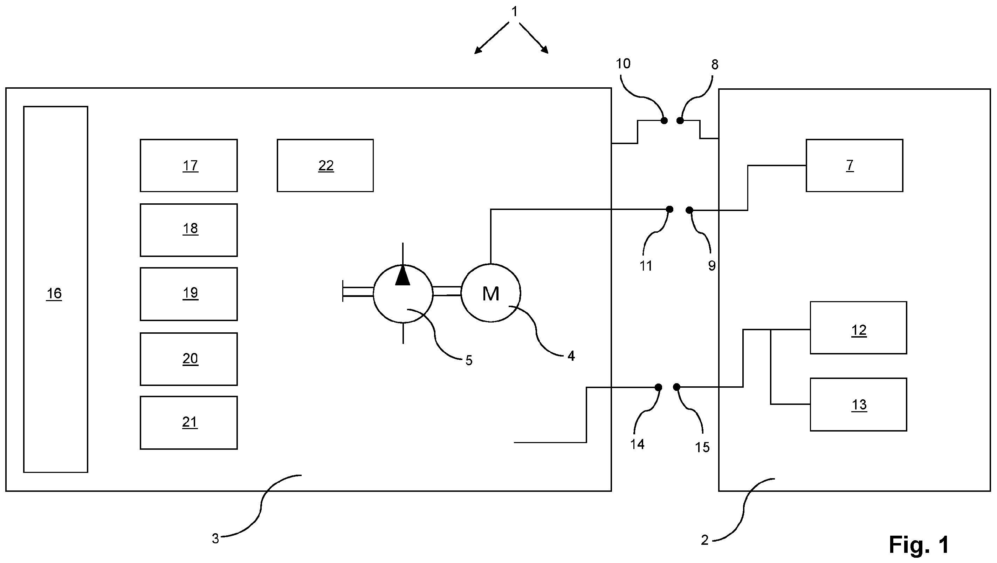

Fig. 1 zeigt ein Ausführungsbeispiel eines erfindungsgemäßen Systems 1 mit einer Energieversorgungseinheit 2 und einem elektrohydraulischen Aggregat 3.

Das elektrohydraulisch Aggregat 3 weist einen Elektromotor 4 auf, über den eine Hydraulikpumpe 5 antreibbar ist, wobei auch mehrere Hydraulikpumpen 5 vorgesehen sein können. Die Hydraulikpumpe 5 kann über eine Fluidverbindung mit einem in Fig. 1 nicht dargestellten Fahrwerk 6 gekoppelt werden, so dass dieses hydrostatisch angetrieben werden kann.

Die Energieversorgungseinheit 2 weist in dem hier dargestellten Ausführungsbeispiel einen elektrischen Energiespeicher 7 auf, insbesondere eine Batterie bzw. einen Akkumulator, wobei auch mehrere Energiespeicher 7 angeordnet sein können. Wesentlich ist, dass die Energieversorgungseinheit 2 mindestens ein mechanisches Verbindungselement 8 und mindestens ein elektrisches Verbindungselement 9 aufweist. Mit diesen ist eine lösbare mechanische Verbindung mit einem korrespondierenden mechanischen Verbindungselement 10 des elektrohydraulischen Aggregats 3 und eine lösbare elektrische Verbindung mit einem korrespondierenden elektrischen Verbindungselement **11** des elektrohydraulischen Aggregats 3 herstellbar. Des Weiteren sind eine Kühleinrichtung 12 und eine Heizeinrichtung 13 vorgesehen, wobei dies nicht zwangsweise der Fall sein muss. Die Kühleinrichtung 12 und die Heizeinrichtung 13 können über mindestens ein Fluidverbindungselement 14 mit einem bzw. mehreren korrespondierenden Fluidverbindungselementen 15 des elektrohydraulischen Aggregats 3 verbunden werden, um von diesem mit einen Kühl-/Heizmedium versorgt zu werden.

Somit ist es auf einfache Weise möglich, die Energieversorgungseinheit 2 umfassend den elektrischen Energiespeicher 7 gegen eine Energieversorgungseinheit 2 mit geladenen elektrischen Energiespeicher 2 zu wechseln, falls dies während des Betriebs notwendig sein sollte. Aufgrund dieser modularen Konstruktion werden Stillstandszeiten minimiert und kann ein Schwerlast-Modulfahrzeug unabhängig von einer lokalen Ladeinfrastruktur elektrisch angertrieben werden.

Das elektrohydraulische Aggregat 3 weist zusätzlich Kopplungselemente 16 auf, um das elektrohydraulische Aggregat 3 mechanisch, elektrisch und fluidisch mit einem Fahrwerk 6 zu verbinden. Zusätzlich können eine Steuereinrichtung 17, ein Hydraulikflüssigkeitstank 18, ein Kühlmitteltank 19, ein Kühler 20, Ventile 21 und/oder ein Niedervolt-Energiespeicher 22 angeordnet sein, was jedoch nicht zwangsweise der Fall sein muss. Alternativ oder zusätzlich ist es denkbar, dass der elektrische Energiespeicher 7 als solches auswechselbar von der Energieversorgungseinheit 2 ausgebildet ist, so dass nicht die gesamte Energieversorgungseinheit 2, sondern lediglich der bzw. die elektrischen Energiespeicher 7 ausgetauscht werden.

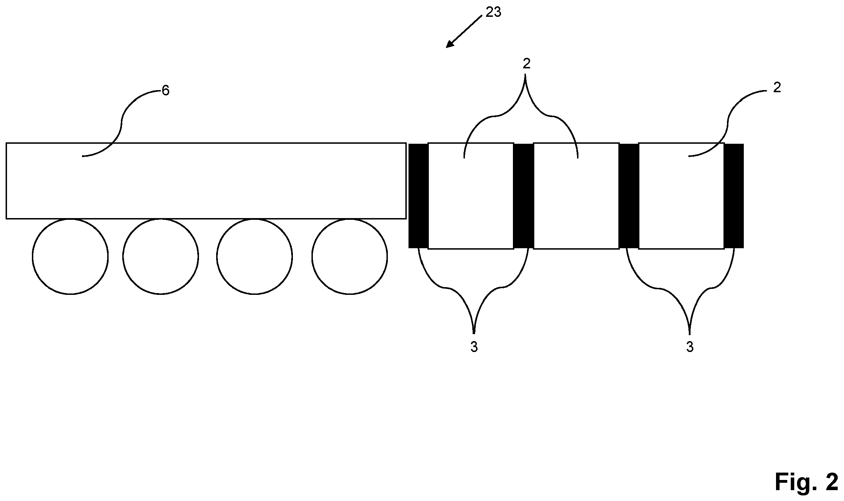

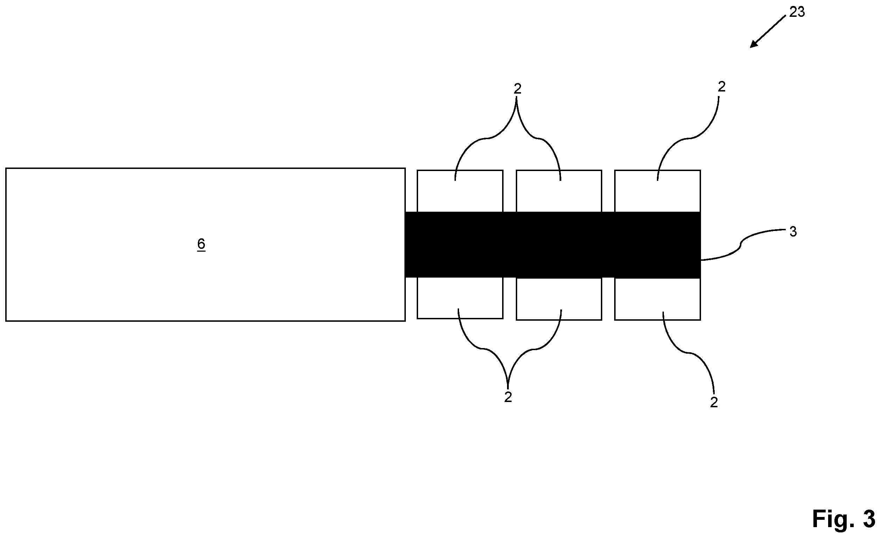

Die Fig. 2 und 3 zeigen ein Ausführungsbeispiel eines erfindungsgemäßen Schwerlast-Modulfahrzeugs 23, das ein Fahrwerk 7 und ein erfindungsgemäßes System 1 aufweist.

Das System 1 umfasst ein elektrohydraulisches Aggregat 3 und sechs Energieversorgungseinheiten 2. Die Energieversorgungseinheiten 2 sind in Längsrichtung des elektrohydraulischen Aggregats 3 gesehen seitlich angeordnet. Durch diese symmetrische Anordnung der Energieversorgungseinheiten 2 ist eine besonders vorteilhafte Gewichtsverteilung realisiert. Des Weiteren sind die Energieversorgungseinheiten 2 bei einer solchen Anordnung gut mit einem Gabelstapler oder ähnlichem erreichbar, was das Auswechseln erheblich vereinfacht. Dabei können auch mehr oder weniger als sechs Energieversorgungseinheiten 2 angeordnet sein. Das elektrohydraulische Aggregat 3 und die Energieversorgungseinheit 2 können entsprechend dem Ausführungsbeispiel gemäß Fig. 1 realisiert sein, so dass auf die diesbezügliche Beschreibung verwiesen wird.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: System
- 2: Energieversorgungseinheit
- 3: elektrohydraulischen Aggregat
- 4: Elektromotor
- 5: Hydraulikpumpe
- 6: Fahrwerk
- 7: Energiespeicher
- 8: mechanisches Verbindungselement (Energieversorgungseinheit)
- 9: elektrisches Verbindungselement (Energieversorgungseinheit)
- 10: elektrisches Verbindungselement (elektrohydraulischen Aggregat)
- 11: elektrisches Verbindungselement (elektrohydraulischen Aggregat)
- 12: Kühleinrichtung
- 13: Heizeinrichtung
- 14: Fluidverbindungselement (Energieversorgungseinheit)
- 15: Fluidverbindungselement (elektrohydraulischen Aggregat)
- 16: Kopplungselemente
- 17: Steuereinrichtung
- 18: Hydraulikflüssigkeitstank
- 19: Kühlmitteltank
- 20: Kühler
- 21: Ventile
- 22: Niedervolt-Energiespeicher
- 23: Schwerlast-Modulfahrzeug

## Patentansprüche

1. System (1) umfassend mindestens eine Energieversorgungseinheit (2) und ein elektrohydraulisches Aggregat (3) für ein Schwerlast-Modulfahrzeug (23),
wobei die Energieversorgungseinheit (2) mindestens einen elektrischen Energiespeicher (7) zum Betreiben eines Elektromotors (4) des elektrohydraulischen Aggregats (3), mindestens ein elektrisches Verbindungselement (9) zur Herstellung einer lösbaren, elektrischen Verbindung des mindestens einen elektrischen Energiespeicher (7) mit dem Elektromotor (4) und mindestens ein mechanisches Verbindungselement (8) zur Herstellung einer lösbaren, mechanischen Verbindung mit dem elektrohydraulischen Aggregat (3) und/oder einem Fahrwerk (6) des Schwerlast-Modulfahrzeug (23) aufweist,
**dadurch gekennzeichnet, dass** das elektrohydraulische Aggregat (3) einen Elektromotor (4) und mindestens eine von diesem angetriebene Hydraulikpumpe (5) aufweist, wobei an dem elektrohydraulischen Aggregat (3) mindestens ein zu dem elektrischen Verbindungselement (9) der Energieversorgungseinheit (2) komplementäres elektrisches Verbindungselement (9) angeordnet ist, so dass der mindestens eine elektrische Energiespeicher (7) lösbar, elektrisch mit dem Elektromotor (4) verbindbar ist.

2. System (1) nach Anspruch 1, **dadurch gekennzeichnet, dass** mindestens eine Aufnahme für den mindestens einen elektrischen Energiespeicher (7) angeordnet ist, beispielsweise ein Rahmen oder ein Gehäuse.

3. System (1) nach Anspruch 2, **dadurch gekennzeichnet, dass** ein elektrischer Energiespeicher (7) oder mehrere elektrische Energiespeicher (7) lösbar in der Aufnahme form- und/oder kraftschlüssig festlegbar ist/sind, beispielsweise über eine Schraubverbindung, eine Klemmverbindung oder eine Clip-Verbindung.

4. System (1) nach einem der Ansprüche 2 oder 3, **dadurch gekennzeichnet, dass** das mindestens eine mechanische Verbindungselement (8) an der Aufnahme ausgebildet ist.

5. System (1) nach Anspruch 4, **dadurch gekennzeichnet, dass** es sich bei der elektrischen Verbindung um eine Gleichspannungsverbindung handelt.

6. System (1) nach einem der Ansprüche 1 bis 5, **dadurch gekennzeichnet, dass** eine Kühleinrichtung (12) zum Kühlen des mindestens einen elektrischen Energiespeichers (7) und/oder eine Heizeinrichtung (13) zum Beheizen des mindestens einen elektrischen Energiespeichers (7) angeordnet ist/sind.

7. System (1) nach Anspruch 6, **dadurch gekennzeichnet, dass** mindestens ein Fluidverbindungselement (14) zur Herstellung einer lösbaren, Fluidverbindung der Kühleinrichtung (12) und/oder der Heizeinrichtung (13) mit dem elektrohydraulischen Aggregat (3) angeordnet ist.

8. System (1) nach einem der Ansprüche 1 bis 7, **dadurch gekennzeichnet, dass** es sich bei dem mindestens einen elektrischen Energiespeicher (7) um eine Hochvoltbatterie oder einen Hochvoltakkumulator handelt, insbesondere mit einer Nennspannung von über 400 Volt, beispielsweise von 400 Volt bis 1000 Volt, vorzugsweise von 400 Volt bis 800 Volt und/oder mit einer Nennleistung im Bereich von 100 kW bis 1000 kW und/oder mit einer Kapazität von 40 kWh bis 1000 kWh.

9. System (1) nach einem der Ansprüche 1 bis 9, **dadurch gekennzeichnet, dass** an dem elektrohydraulischen Aggregat (3) mindestens ein mechanisches Verbindungselement (8) angeordnet ist, das komplementär zu dem mindestens einen mechanischen Verbindungselement (8) der Energieversorgungseinheit (2) ausgebildet ist, so dass die Energieversorgungseinheit (2) und das elektrohydraulische Aggregat (3) lösbar, mechanisch miteinander verbindbar sind, und/oder
dass an dem elektrohydraulischen Aggregat (3) mindestens eine Aufnahme für den mindestens einen elektrischen Energiespeicher (7) angeordnet ist, beispielsweise ein Rahmen, und/oder
dass mehrere Energieversorgungseinheiten (2) angeordnet sind.

10. System (1) nach Anspruch 9, **dadurch gekennzeichnet, dass** mindestens eine Energieversorgungseinheit, in Längsrichtung des elektrohydraulischen Aggregats (3) gesehen, seitlich an dem elektrohydraulischen Aggregat (3) festlegbar ist, vorzugsweise an beiden Seiten des elektrohydraulischen Aggregats (3).

11. System (1) nach einem der Ansprüche 1 bis 10, **dadurch gekennzeichnet, dass** mindestens eine Energieversorgungseinheit an einer Unterseite und/oder an einer Oberseite des elektrohydraulischen Aggregats (3) festlegbar ist.

12. System (1) nach einem der Ansprüche 1 bis 11, **dadurch gekennzeichnet, dass** mindestens eine Energieversorgungseinheit an einer Vorderseite und/oder an einer Hinterseite des elektrohydraulischen Aggregats (3) festlegbar ist.

13. Schwerlast-Modulfahrzeug (23) mit mindestens einem System (1) nach einem der Ansprüche 1 bis 12 und mindestens einem Fahrwerk (6).

14. Schwerlast-Modulfahrzeug (23) nach Anspruch 13, **dadurch gekennzeichnet, dass** an dem Fahrwerk (6) mindestens ein mechanisches Verbindungselement (8) angeordnet ist, das komplementär zu dem mindestens einen mechanischen Verbindungselement (8) der Energieversorgungseinheit ausgebildet ist, so dass die Energieversorgungseinheit und das Fahrwerk (6) lösbar, mechanisch miteinander verbindbar sind.

## Claims

1. A system (1) comprising at least one power supply unit (2) and an electrohydraulic unit (3) for a heavy-duty modular vehicle (23),
wherein the power supply unit (2) has at least one electrical energy store (7) for operating an electric motor (4) of the electrohydraulic unit (3), at least one electrical connecting element (9) for establishing a releasable electrical connection of the at least one electrical energy store (7) to the electric motor (4), and at least one mechanical connecting element (8) for establishing a releasable mechanical connection to the electrohydraulic unit (3) and/or to a chassis (6) of the heavy-duty modular vehicle (23),
**characterized in that** the electrohydraulic unit (3) has an electric motor (4) and at least one hydraulic pump (5) driven by same, wherein at least one electrical connecting element (9) that is complementary to the electrical connecting element (9) of the power supply unit (2) is situated at the electrohydraulic unit (3), so that the at least one electrical energy store (7) is releasably electrically connectable to the electric motor (4).

2. The system (1) according to claim 1, **characterized in that** at least one holder, for example a frame or a housing, is provided for the at least one electrical energy store (7).

3. The system (1) according to claim 2, **characterized in that** an electrical energy store (7) or multiple electrical energy stores (7) is/are releasably fixable in the holder in a form-fit and/or force-fit manner, for example via a screw connection, a clamp connection, or a clip connection.

4. The system (1) according to one of claims 2 or 3, **characterized in that** the at least one mechanical connecting element (8) is provided at the holder.

5. The system (1) according to claim 4, **characterized in that** the electrical connection is a direct current connection.

6. The system (1) according to one of claims 1 through 5, **characterized in that** a cooling device (12) for cooling the at least one electrical energy store (7), and/or a heating device (13) for heating the at least one electrical energy store (7), is/are provided.

7. The system (1) according to claim 6, **characterized in that** at least one fluid connecting element (14) for establishing a releasable fluid connection of the cooling device (12) and/or the heating device (13) to the electrohydraulic unit (3) is provided.

8. The system (1) according to one of claims 1 through 7, **characterized in that** the at least one electrical energy store (7) is a high-voltage battery or a high-voltage accumulator, in particular having a nominal voltage of greater than 400 volts, for example 400 volts to 1000 volts, preferably 400 volts to 800 volts, and/or having a nominal power in the range of 100 kW to 1000 kW and/or a capacity of 40 kWh to 1000 kWh.

9. The system (1) according to one of claims 1 through 9, **characterized in that** at least one mechanical connecting element (8) that is complementary to the mechanical connecting element (8) of the power supply unit (2) is situated at the electrohydraulic unit (3), so that the power supply unit (2) and the electrohydraulic unit (3) are releasably mechanically connectable to one another, and/or that at least one holder for the at least one electrical energy store (7), for example a frame, is situated at the electrohydraulic unit (3), and/or
that multiple power supply units (2) are provided.

10. The system (1) according to claim 9, **characterized in that** at least one power supply unit, viewed in the longitudinal direction of the electrohydraulic unit (3), is fixable on one side of the electrohydraulic unit (3), preferably on both sides of the electrohydraulic unit (3).

11. The system (1) according to one of claims 1 through 10, **characterized in that** at least one power supply unit is fixable at a bottom side and/or at a top side of the electrohydraulic unit (3).

12. The system (1) according to one of claims 1 through 11, **characterized in that** at least one power supply unit is fixable at a front side and/or at a rear side of the electrohydraulic unit (3).

13. A heavy-duty modular vehicle (23) having at least one system (1) according to one of claims 1 through 12, and at least one chassis (6).

14. The heavy-duty modular vehicle (23) according to claim 13, **characterized in that** at least one mechanical connecting element (8) that is complementary to the mechanical connecting element (8) of the power supply unit is situated at the chassis (6), so that the power supply unit and the chassis (6)) are releasably mechanically connectable to one another.

## Revendications

1. Système (1) comprenant au moins une unité (2) d'alimentation en énergie et un groupe électrohydraulique (3) pour un véhicule (23) modulaire pour charges lourdes,
dans lequel l'unité (2) d'alimentation en énergie comprend au moins un dispositif (7) de stockage d'énergie électrique destiné à alimenter un moteur électrique (4) du groupe électrohydraulique (3), au moins un élément (9) de connexion électrique destiné à établir une connexion électrique amovible entre l'au moins un dispositif (7) de stockage d'énergie électrique et le moteur électrique (4), et au moins un élément (8) de liaison mécanique destiné à établir une liaison mécanique amovible avec le groupe électrohydraulique (3) et/ou un châssis (6) du véhicule (23) modulaire pour charges lourdes,
**caractérisé en ce que** le groupe électrohydraulique (3) comprend un moteur électrique (4) et au moins une pompe hydraulique (5) entraînée par celui-ci, au moins un élément (9) de connexion électrique complémentaire de l'élément (9) de connexion électrique de l'unité (2) d'alimentation en énergie étant agencé sur le groupe électrohydraulique (3), de sorte que l'au moins un dispositif (7) de stockage d'énergie électrique peut être relié électriquement de manière amovible au moteur électrique (4).

2. Système (1) selon la revendication 1, **caractérisé en ce qu'**au moins un logement est agencé pour l'au moins un dispositif (7) de stockage d'énergie électrique, par exemple un cadre ou un boîtier.

3. Système (1) selon la revendication 2, **caractérisé en ce qu'**un dispositif (7) de stockage d'énergie électrique ou plusieurs dispositifs (7) de stockage d'énergie électrique peuvent être fixés de manière amovible dans le logement par complémentarité de forme et/ou par adhérence, par exemple par l'intermédiaire d'une liaison vissée, d'une liaison par serrage ou d'une liaison par clip.

4. Système (1) selon l'une des revendications 2 ou 3, **caractérisé en ce que** l'au moins un élément (8) de liaison mécanique est réalisé sur le logement.

5. Système (1) selon la revendication 4, **caractérisé en ce que** la connexion électrique consiste en une connexion de tension continue.

6. Système (1) selon l'une des revendications 1 à 5, **caractérisé en ce qu'**un dispositif de refroidissement (12) pour le refroidissement de l'au moins un dispositif (7) de stockage d'énergie électrique et/ou un dispositif de chauffage (13) pour le chauffage de l'au moins un dispositif (7) de stockage d'énergie électrique sont agencés.

7. Système (1) selon la revendication 6, **caractérisé en ce qu'**au moins un élément (14) de raccordement de fluide est agencé pour établir une liaison fluidique amovible entre le dispositif de refroidissement (12) et/ou le dispositif de chauffage (13) et le groupe électrohydraulique (3).

8. Système (1) selon l'une des revendications 1 à 7, **caractérisé en ce que** l'au moins un dispositif (7) de stockage d'énergie électrique consiste en une batterie haute tension ou un accumulateur haute tension, en particulier d'une tension nominale supérieure à 400 volts, par exemple de 400 volts à 1 000 volts, de préférence de 400 volts à 800 volts, et/ou d'une puissance nominale dans la plage de 100 kW à 1 000 kW, et/ou d'une capacité de 40 kWh à 1 000 kWh.

9. Système (1) selon l'une des revendications 1 à 9, **caractérisé en ce qu'**au moins un élément (8) de liaison mécanique est agencé sur le groupe électrohydraulique (3), lequel est réalisé de manière complémentaire à l'au moins un élément (8) de liaison mécanique de l'unité (2) d'alimentation en énergie, de sorte que l'unité (2) d'alimentation en énergie et le groupe électrohydraulique (3) peuvent être reliés entre eux mécaniquement de manière amovible, et/ou
qu'au moins un logement pour l'au moins un dispositif (7) de stockage d'énergie électrique, par exemple un cadre, est agencé sur le groupe électrohydraulique (3), et/ou
que plusieurs unités (2) d'alimentation en énergie sont agencées.

10. Système (1) selon la revendication 9, **caractérisé en ce qu'**au moins une unité d'alimentation en énergie peut être fixée latéralement sur le groupe électrohydraulique (3), telle que vue dans la direction longitudinale du groupe électrohydraulique (3), de préférence des deux côtés du groupe électrohydraulique (3).

11. Système (1) selon l'une des revendications 1 à 10, **caractérisé en ce qu'**au moins une unité d'alimentation en énergie peut être fixée sur une face inférieure et/ou sur une face supérieure du groupe électrohydraulique (3).

12. Système (1) selon l'une des revendications 1 à 11, **caractérisé en ce qu'**au moins une unité d'alimentation en énergie peut être fixée sur une face avant et/ou sur une face arrière du groupe électrohydraulique (3).

13. Véhicule (23) modulaire pour charges lourdes comprenant au moins un système (1) selon l'une des revendications 1 à 12 et au moins un châssis (6).

14. Véhicule (23) modulaire pour charges lourdes selon revendications 13, **caractérisé en ce qu'**au moins un élément (8) de liaison mécanique est agencé sur le châssis (6), lequel est réalisé de manière complémentaire à l'au moins un élément (8) de liaison mécanique de l'unité d'alimentation en énergie, de sorte que l'unité d'alimentation en énergie et le châssis (6) peuvent être reliés entre eux mécaniquement de manière amovible.
